# EUROPÄISCHE PATENTANMELDUNG

(11) **EP 1 018 372 A1**
(43) Veröffentlichungstag der Anmeldung: **12.07.2000**
(21) Anmeldenummer: 99630002.6
(22) Anmeldetag: 04.01.1999
(51) Int. Cl.: B03B 9/06

(54) **Verfahren und Vorrichtung zur Abfallaufbereitung zwecks Gewinnung von organischen Grob- und Feinfraktionen**

(71) Anmelder: R.S.T. Luxembourg S.A., 1930 Luxemburg (LU)
(72) Erfinder: Schmidt, Hans, 38704 Liebenburg (DE)
(74) Vertreter: Weydert, Robert

(57) **Zusammenfassung**

Die Groborganik-Fraktion (12) wird durch eine speziell ausgebildete Grobabsiebung (4) nach einer Vorzerkleinerung (2) und einer Fe- (3) und NE-Metallabscheidung (6) abgetrennt und die Feinorganik-Fraktion (15) wird durch weitere Verfahrensschritte mit der Abtrennung von Wasser, NE-Metallen und Mineralien separiert. Die getrennt gewonnene Groborganik-Fraktion (12) und Feinorganik-Fraktion (15) stellen getrennt vorliegende Grob-Brennstoffe (20) und Fein-Brennstoffe (19) dar, deren thermische Verwertung in den für die jeweilige Korngrösse am besten geeigneten thermischen Verwertungsapparaturen möglich ist. Die separierten nicht brennbaren Stoffgruppen sind direkt stofflich recycelbar.

## Beschreibung

Die vorliegende Erfindung betrifft ein Verfahren zur Abfallaufbereitung zwecks Gewinnung von getrennten schadstoffentfrachteten organischen Grob- und Feinfraktionen als getrennten Grob-Brennstoff und Fein-Brennstoff, sowie eine Vorrichtung zur DurchfUhrung des Verfahrens.

Zur Gewinnung von heizwertreichen getrennten Grob- und Feinfraktionen aus Abfällen bedarf es im Verfahrensablauf zunächst einer geeigneten Abtrennung der organischen Grobfraktion, die möglichst heizwertreich und entfrachtet von Fe- und NE-Metallen sein soll.

Verfahren mit ähnlicher Zielsetzung sind beispielsweise beschrieben in der Firmenschrift der Fa. Herhof Umwelttechnik Solms-Niederbeil. Dieses beschriebene Verfahren hat jedoch eine erste Siebung nach der Trocknung und die Metallabscheidung erst im Bereich der Feingutaufbereitung. Außerdem wird das abgesiebte Grobgut größer 40mm direkt nachzerkleinert und dem Feingut wieder zugegeben. Das Verfahren ist mit dem Nachteil behaftet, daß das gesamte Organikmaterial getrocknet und auf unter 40mm Korngröße zerkleinert werden muß. Beide Verfahrensschritte, wie Trocknen und Nachzerkleinern für das gesamte Gut sind energetisch aufwendig und unwirtschaftlich.

Der Erfindung liegt die Aufgabe zugrunde, eine heizwertreiche und schadstoffentfrachtete Groborganik-Fraktion bereits vor den aufwendigen Verfahrensschritten der Trocknung und Weiterzerkleinerung im Aufbereitungsprozeß von Abfällen zu gewinnen und die verbleibende Feinfraktion kleiner ca. 60mm einer weiteren Aufbereitung zur Separation der organischen Fraktionen zu unterziehen.

Die erfindungsgemäße Lösung der Aufgabe geht von der Erkenntnis aus, daß im Korngrößenbereich Über ca. 60mm die heizwertreichen, überwiegend trockenen und weitgehend NE-metallarmen organischen Stoffanteile der Abfälle enthalten sind.
Die Abtrennung dieser zu gewinnenden Groborganik-Fraktion sowie die Separation der organischen Fraktion aus dem Siebdurchgang wird erfindungsgemäß dadurch gelöst, daß bereits nach der Vorzerkleinerung und der Fe-Metallabscheidung mit einem speziell gelochten Trommelsieb die Groborganik-Fraktion im Körnungsbereich zwischen der Vorzerkleinerung von ca. 150mm und der Siebweite von ca. 60mm als Grob-Brennstoff abgetrennt wird, und der Siebdurchgang kleiner ca. 60mm einer weiteren Aufbereitung zur Separation der organischen Fraktion durch Abtrennung des Wasseranteils, der NE-Metalle und der Mineralien zu einem Fein-Brennstoff unterzogen wird.

Die Erfindung wird an einem Ausführungsbeispiel durch die nachstehenden Ausführungen in Verbindung mit einer Fließschema-Zeichnung näher erläutert.

Das erfindungsgemäße Verfahren gliedert sich in einen ersten Bereich zur Abtrennung der vorbeschriebenen Groborganik-Fraktion, bestehend aus einer Vorzerkleinerung (2) der angelieferten Abfälle auf ca.150mm Korngröße und einer nachgeschalteten Fe-Metallabscheidung (3). Das vorzerkleinerte und Fe-metallfreie Material wird einer Siebung (4), vorzugsweise als Siebtrommel mit einer speziellen Rundlochung von ca. 60mm und dem 7 - 8 fachen des Lochdurchmessers in rhombischer Anordnung, zugeführt und die im Körnungsbereich von ca. 150 bis 60mm liegende Groborganik-Fraktion (12) als SiebUberlauf abgetrennt. Es hat sich in Versuchen gezeigt, daß so gut wie alle partikular vorliegenden NE-Metallteile in den Siebdurchgang gelangen und somit die abgetrennte Groborganik-Fraktion (12) eine starke Schadstoffentfrachtung aufweist und als heizwertreicher Grob-Brennstoff (20) vorliegt.

Im zweiten Bereich des Verfahrens wird der Siebdurchgang kleiner 60mm weiter aufbereitet. Dieser Materialanteil enthält die eigentliche Wasserfracht und wird im weiteren einer Trocknung (5) unterzogen. Das trockene, nun von Klebekräften befreite Material wird je nach Art der Abfälle entweder zuerst einer NE-Metallabscheidung (6) mit nachfolgender Nachzerkleinerung (7) oder zuerst einer Nachzerkleinerung (7) mit nachfolgender NE-Metallabscheidung (6) unterworfen.

In der Nachzerkleinerung wird das Material auf ein relativ enges Kornspektrum von ca. 10 - 15mm herunter zerkleinert, anschließend wird die leichte Feinorganik-Fraktion (15) durch Sichtung oder Saugung abgetrennt und als schadstoffentfrachteter Fein-Brennstoff (19) gewonnen.

In einer nachfolgenden Feinabsiebung (9) wird die Feinstfraktion kleiner ca. 2mm abgetrennt und dem Fein-Brennstoff zugeordnet. Das verbleibende Material im Körnungsbereich ca. 2 - 10mm enthält anteilig die meisten Mineralien (17) wie Glas, Keramik, Steine. Die Mineralien (17) werden mittels einer Dichtetrennung (10) von der granulatartigen Feinorganik-Fraktion (18) abgetrennt. Die verbleibende Feinorganik-Fraktion (18) wird ebenfalls dem Fein-Brennstoff zugeordnet.

Die mit der Erfindung erzielten Vorteile bestehen insbesondere darin, daß eine Groborganik-Fraktion bereits vor den aufwendigen Verfahrensschritten von Trocknung und Nachzerkleinerung gewonnen wird und der abgetrennte Materialanteil nicht mit den hohen Kosten dieser und weiterer Verfahrensschritte belastet wird. Die so gewonnene Groborganik-Fraktion besteht aus heizwertreichen Stoffen, ist schadstoffentfrachtet und besitzt ein einheitliches Körnungsband. Mit diesen Eigenschaften ist die Groborganik-Fraktion in idealer Weise als Grob-Brennstoff im Sinne von ErsatzBrennstoffen für Pyrolyse-, Entgasungs- und Vergasungsanlagen geeignet.

Weiterhin ist von Vorteil, daß der verbleibende Materialanteil in weiteren erfindungsgemäßen Verfahrensschritten aufbereitet und die organische Fraktionen durch Abtrennung des Wasseranteils, der NE-Metalle und der Mineralien separiert werden und sich in idealer Weise als Fein-Brennstoff im Sinne von Ersatzbrennstoffen fUr Vergasungsanlagen wie z.B. Schmelzzyklone, Schmelzkammern und Einblasfeuerungen allgemeiner Art geeignet sind.

Vorteilhaft ist außerdem, daß die abgetrennten Stoffgruppen wie Wasser, Fe-Metalle, NE-Metalle und Mineralien stofflich verwertbar, also recycelbar sind und somit keine Reststoffe zurUckbleiben, die zu deponieren wären.

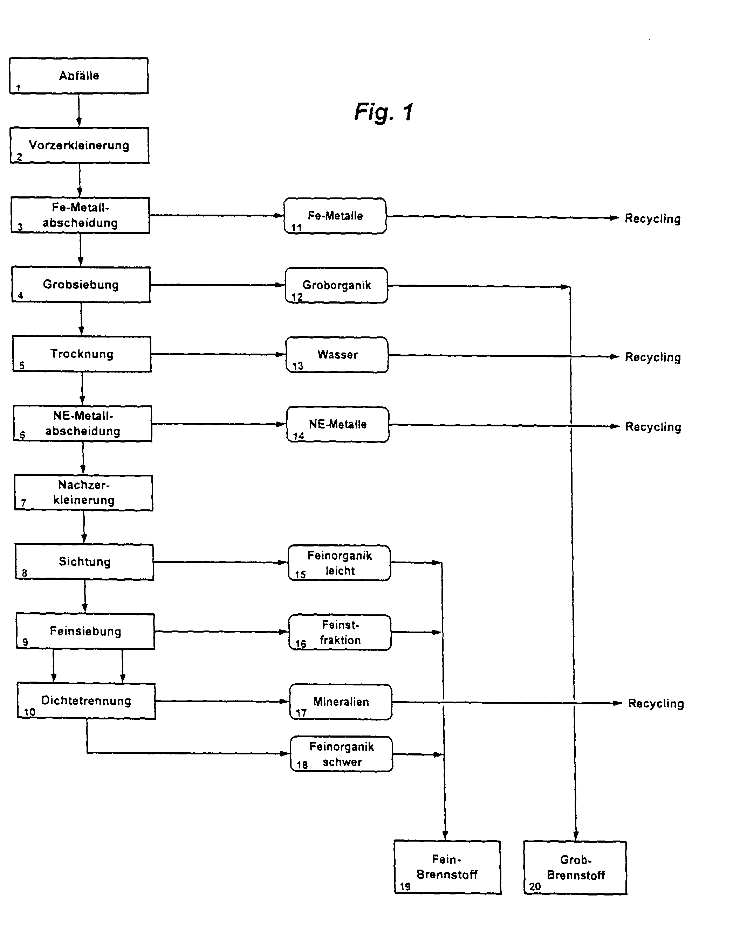

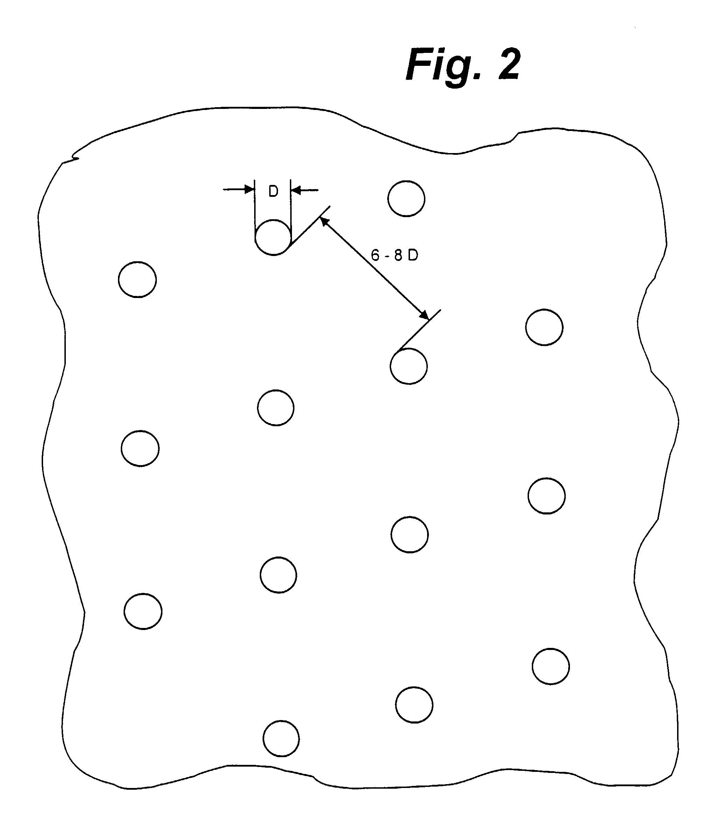

## Patentansprüche

1. Verfahren und Vorrichtung zur Abfallaufbereitung zwecks Gewinnung von getrennten schadstoffentfrachteten organischen Grob- und Feinfraktionen, dadurch gekennzeichnet, daß im Anschluß an eine Vorzerkleinerung und eine Fe-Metallabscheidung das anfallende Material einer speziellen Grobabsiebung unterworfen wird, wobei als Grobfraktioen fast ausschließlich organisches und metallentfrachtetes Material gewonnen wird.

2. Verfahren nach Anspruch 1, dadurch gekennzeichnet, daß das gewonnene Material einen Körnungsgrößenbereich zwischen 60 mm und 150 mm aufweist und damit als definierter und heizwertreicher Einsatzstoff fUr Pyrolyseprozesse oder andere Entgasungs- oder Vergasungs- oder Verbrennungsprozesse ideal geeignet ist.

3. Verfahren nach Anspruch 1 und 2, dadurch gekennzeichnet, daß die als Siebdurchgang anfallende Misch-Feinfraktion einer weiteren Aufbereitung zur Separation der organischen Fraktion durch Abtrennung des Wasseranteils, der NE-Metalle und der Mineralien zu einerm Feinbrennstoff unterzogen wird

4. Verfahren nach Ansprüchen 1 bis 3, dadurch gekennzeichnet, daß durch die getrennte Erfassung der organischen und heizwertreichen Grobfraktion (z.B. 60 bis 150 mm) und Feinfraktionen (z.B. 0 - 15 mm) eine getrennte thermische Verwertung in den fUr die jeweilige Korngröße als sogenannter Grob-Brennstoff und Fein-Brennstoff am besten geeigneten thermischen Verwertungsapparaturen ermöglicht wird.

5. Vorrichtung zur DurchfUhrung des Verfahrens nach Anspruch 1 bis 4, dadurch gekennzeichnet, daß die spezielle Grobabsiebung nach Anspruch 1 mit einem Trommelsieb erfolgt, welches eine Rundlochung von ca.60mm Lochdurchmesser und eine Stegbreite zwischen den Löchern vom 6-8fachen des Lochdurchmessers ausweist.
